# EUROPEAN PATENT SPECIFICATION

(11) **EP 3 852 459 B1**
(45) Date of publication and mention of the grant of the patent: **01.11.2023**
(21) Application number: 18933504.5
(22) Date of filing: 10.09.2018
(51) Int. Cl.: H04L 5/00, H04L 27/26, H04W 72/23

(54) **USER EQUIPMENT AND WIRELESS COMMUNICATION METHOD**
BENUTZERGERÄT UND DRAHTLOSKOMMUNIKATIONSVERFAHREN
ÉQUIPEMENT D'UTILISATEUR ET PROCÉDÉ DE COMMUNICATION SANS FIL

(43) Date of publication of application: 21.07.2021
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/033508
(87) International publication number: WO 2020/053943

(56) References cited:
- JP-A- 2013 506 383
- JP-A- 2017 539 123
- JP-A- 2018 506 246
- US-A1- 2018 077 643
- HUAWEI ET AL: "Remaining issues on DL control", 3GPP DRAFT; R1-1808069, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20180820 - 20180824 11 August 2018 (2018-08-11), XP051515473, Retrieved from the Internet: URL:http://www.3gpp.org/ftp/tsg%5Fran/WG1% 5FRL1/TSGR1%5F94/Docs/R1%2D1808069%2Ezip [retrieved on 2018-08-11]
- NTT DOCOMO INC: "Offline summary on Wednesday", 3GPP DRAFT; R1-1807772 OFFLINE SUM WED 7.1.3.1.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 24 May 2018 (2018-05-24), XP051463391, Retrieved from the Internet: URL:http://www.3gpp.org/ftp/tsg%5Fran/WG1% 5FRL1/TSGR1%5F93/Docs [retrieved on 2018-05-24]
- ANONYMOUS: "3rd Generation Partnership Project; Technical Specification Group Radio Access Network; NR; Physical layer procedures for control (Release 15)", 3GPP STANDARD; TECHNICAL SPECIFICATION; 3GPP TS 38.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V15.2.0, 29 June 2018 (2018-06-29), pages 1-99, XP051474490,

## Description

### Technical Field

The present disclosure relates to a user terminal and a radio communication method in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (for example, LTE Rel. 8 to Rel. 14), a radio base station (for example, eNB (eNode B)) transmits a physical layer control signal (for example, downlink control information (DCI)) to a user terminal (UE (User Equipment)) by using a downlink control channel (for example, PDCCH (Physical Downlink Control Channel)).

US 2018/0077643 A1 discloses a wireless device that receives RRC message(s) with configuration parameters comprising a deactivation timer value for a deactivation timer of a cell. The deactivation timer starts in response to receiving a MAC CE that indicates activation of the cell. A first DCI comprising a first field indicating an uplink resource block assignment, and a first trigger field indicating that the first DCI is triggered in response to a second trigger. The deactivation timer restarts in response to receiving the first DCI. The second DCI comprises : a second trigger field indicating the second trigger, and a second field indicating a subframe offset value. The deactivation timer restarts in response to receiving the second DCI via a common search space. Transport blocks are transmitted, in response to the second trigger, employing the uplink resource block assignment of a subframe having a position determined based on the subframe offset value .

In the 3GPP standard contribution entitled "Remaining issues on DL control" (R1-1808069), the authors disclose issues on downlink control channel, including remaining aspects on SSB/CORESET#0/Search space #0, BD and CCE limit for cross-carrier scheduling and DCI size budget for CA.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTR_AN); Overall description; Stage 2 (Release 8)," April, 2010

### Summary of Invention

### Technical Problem

For a future radio communication system (hereinafter referred to as NR), a study is underway to control (slot format, preemption, transmission power control, and so on) at least one carrier (cell or component carrier (CC)) by using different particular DCI formats such as a DCI format for scheduling of a downlink shared channel (for example, PDSCH) and a DCI format for scheduling of an uplink shared channel (for example, PUSCH).

However, no study is conducted about a relationship between scheduling between different carriers (cross carrier scheduling) and monitoring of a particular DCI format. In a case that this relationship is unclear, the UE may fail to appropriately detect the particular DCI format.

The present invention has been made in view of the above, and it is an object of the present invention to provide a user terminal and a radio communication method that appropriately monitors downlink control information with a particular format. Solution to Problem

A user terminal according to the invention is defined in independent claim 1.

### Advantageous Effects of Invention

According to an aspect of the present disclosure, downlink control information with a particular format can be appropriately monitored.

### Brief Description of Drawings

FIG. 1 is a diagram to show an example of monitoring of DCI;
FIG. 2 is a diagram to show an example of monitoring of DCI according to Aspect 1-1;
FIG. 3 is a diagram to show an example of monitoring of DCI according to Aspect 1-2;
FIG. 4 is a diagram to show an example of a schematic structure of a radio communication system according to the present embodiment;
FIG. 5 is a diagram to show an example of an overall structure of a radio base station according to the present embodiment;
FIG. 6 is a diagram to show an example of a functional structure of the radio base station according to the present embodiment;
FIG. 7 is a diagram to show an example of an overall structure of a user terminal according to the present embodiment;
FIG. 8 is a diagram to show an example of a functional structure of the user terminal according to the present embodiment; and
FIG. 9 is a diagram to show an example of a hardware structure of the radio base station and the user terminal according to the present embodiment.

### Description of Embodiments

For future radio communication systems (for example, NR, 5G, 5G+, and Rel. 15 and subsequent releases), a study is underway to employ a control resource set (CORESET) to transmit a physical layer control signal (for example, downlink control information (DCI)) to a user terminal from a base station (which may be also referred to, for example, as a "BS (Base Station)," a "transmission/reception point (TRP)," an "eNB (eNodeB)," a "gNB (NR NodeB)," and the like).

The CORESET is an allocation candidate region for a downlink control channel (for example, PDCCH (Physical Downlink Control Channel)). The CORESET may include a given frequency domain resource and a time domain resource (for example, one or two OFDN symbols and so on). The PDCCH (or DCI) is mapped to a given resource unit in the CORESET.

The given resource unit may be at least one of, for example, a control channel element (CCE), a CCE group including one or more CCEs, a resource element group (REG) including one or more resource elements (REs), one or more REG bundle (REG group), and a physical resource block (PRB).

The user terminal monitors (blind decodes) a search space (SS) in the CORESET to detect DCI for the user terminal. The search space may include a search space (common search space (CSS)) used for the monitoring of (cell-specific) DCI which is common to one or more user terminals and a search space (user-specific search space (USS)) used for the monitoring of DCI specific to the user terminal.

The CSS may include at least one of the following:
- Type0-PDCCH CSS
- Type0A-PDCCH CSS
- Type1-PDCCH CSS
- Type2-PDCCH CSS
- Type3-PDCCH CSS

Type0-PDCCH CSS is also referred to as an "SS for SIB1," "SS for RMSI (Remaining Minimum System Information)," and so on. Type0-PDCCH CSS may be a search space for the DCI which is cyclic-redundancy-check (CRC)-scrambled with a given identifier (for example, SI-RNTI: System Information-Radio Network Temporary Identifier) (search space for monitoring of the DCI used to schedule a downlink shared channel (PDSCH (Physical Downlink Shared Channel)) transmitting an SIB1).

Here, CRC scrambling refers to addition to (inclusion in) DCI of CRC bits scrambled (masked) with a given identifier.

TypeOA-PDCCH CSS is also referred to as an "SS for OSI (Other System Information)," and the like. TypeOA-PDCCH CSS may be a search space for the DCI which is CRC-scrambled with a given identifier (for example, the SI-RNTI) (search space for monitoring of the DCI used to schedule a PDSCH transmitting the OSI).

Type1-PDCCH CSS is also referred to as an "SS for random access (RA)," and the like. Type1-PDCCH CSS may be a search space for the DCI which is CRC-scrambled with a given identifier (for example, an RA-RNTI (Random Access-RNTI), a TC-RNTI (Temporary Cell-RNTI) or a C-RNTI (Cell-RNTI)) (search space for monitoring of the DCI used to schedule a PDSCH transmitting a message for an RA procedure (for example, Random Access Response (RAR, message 2), message for the contention resolution (message 4))).

Type2-PDCCH CSS is also referred to as an "SS for paging," and the like. Type2-PDCCH CSS may be a search space for the DCI which is CRC-scrambled with a given identifier (for example, P-RNTI (Paging-RNTI)) (search space for monitoring of the DCI used to schedule a PDSCH transmitting the paging).

Type3-PDCCH CSS may be a search space for the DCI which is CRC-scrambled with a given identifier (for example, an INT-RNTI (Interruption RNTI) for DL preemption indication, an SFI-RNTI (Slot Format Indicator RNTI) for slot format indication, a TPC-PUSCH-RNTI for transmission power control (TPC) of a PUSCH (Physical Uplink Shared Channel), a TPC-PUCCH-RNTI for TPC of a PUCCH (Physical Uplink Control Channel), a TPC-SRS-RNTI for TPC of an SRS (Sounding Reference Signal), a C-RNTI, a CS-RNTI (Configured Scheduling RNTI), an SP-CSI-RNTI (Semi-Persistent-CSI-RNTI)), or an MCS (Modulation and Coding Scheme)-C (Cell)-RNTI).

The USS may be a search space for the DCI to which CRC bits to be CRC-scrambled with a given identifier (for example, C-RNTI, CS-RNTI, SP-CSI-RNTI, or MCS-C-RNTI) are added (included).

The UE may be configured with monitoring of DCI with a particular DCI format for control of a particular carrier. The particular DCI format may be at least one of a DCI format (for example, DCI format 2_0) used to report a slot format (TDD-UL-DL configuration), a DCI format (for example, DCI format 2_1) used to report resources (PRB and OFDM) in which the UE assumes no transmission to the UE, a DCI format (for example, DCI format 2_2) used to transmit a TPC command for PUCCH and PUSCH, and a DCI format (for example, DCI format 2_3) used to transmit a group of TPC commands for SRS transmission performed by one or more UEs.

DCI format 2_0 may use CRC scrambled with the SFI-RNTI. DCI format 2_1 may use CRC scrambled with the INT-RNTI. DCI format 2_2 may use CRC scrambled with the TPC-PUSCH-RNTI or TPC-PUCCH-RNTI. DCI format 2_3 may use CRC scrambled with the TPC-SRS-RNTI.

For the UE, parameters required to monitor DCI format 2_0 in which CRC is scrambled with the SFI-RNTI may be configured in a given serving cell through higher layer signaling (the parameters include, for example, the value of the SFI-RNTI, a payload size in DCI format 2_0, a period for a search space for monitoring DCI format 2_0 and monitoring occasions, the number of PDCCH candidates, and an aggregation level for the PDCCH candidates). Further, for the UE, parameters related to a slot format indicated by DCI format 2_0 described above may be configured (the parameters include, for example, cell slot format combination configuration information, SlotFormatCombinationsPerCell). SlotFormatCombinationsPerCell may include a serving cell ID (index, serveCellIndex) indicating to which cell each slot format indication (SFI) field in DCI format 2_0 is applied.

For the UE, parameters required to monitor DCI format 2_1 in which CRC is scrambled with the INT-RNTI may be configured in a given BWP in a given serving cell through higher layer signaling (the parameters include, for example, the value of the INT-RNTI, a payload size in DCI format 2_1, a period for a search space for monitoring DCI format 2_1 and monitoring occasions, the number of PDCCH candidates, and an aggregation level for the PDCCH candidates). Furthermore, for the UE, parameters related to preempted resources indicated by DCI format 2_1 may be configured (the parameters include, for example, association between the value of a particular field in DCI format 2_1 (for example, a pre-emption indication (PI) field) and a time and frequency resource to be assumed to have been pre-empted). Furthermore, for the UE, a serving cell ID (index, serveCellIndex) indicating to which cell a particular field in DCI format 2_1 is applied may be configured.

For the UE, parameters required to monitor DCI format 2_2 in which CRC is scrambled with at least one of the TPC-PUSCH-RNTI and the TPC-PUCCH-RNTI may be configured in a given BWP in a given serving cell through higher layer signaling (the parameters include, for example, the value of at least one of the TPC-PUSCH-RNTI and the TPC-PUCCH-RNTI, a period for a search space for monitoring DCI format 2_2 and monitoring occasions, the number of PDCCH candidates, and an aggregation level for the PDCCH candidates). Furthermore, the UE may be configured with a field in DCI format 2_2 that is interpreted to be a TPC command (in other words, the location of a plurality of bits in a bit sequence that is interpreted to be a TPC command) and the index of a serving cell in which the PUSCH or PUCCH to which the TPC command is applied is transmitted.

The particular DCI format may be a DCI format including at least one of the slot format indication (for example, the SFI field), the pre-emption indication (for example, the PI field), the TPC command, and the group of TPC commands.

The particular DCI format may be a DCI format detected by monitoring of Type3-PDCCH CSS.

The particular DCI format may be a DCI format using CRC scrambled with an RNTI other than C-RNTI, CS-RNTI, SP-CSI-RNTI, MCS-C-RNTI, RA-RNTI, TC-RNTI, P-RNTI, and SI-RNTI.

In this way, the UE can apply the particular DCI format to a cell indicated by a higher layer parameter.

Note that the higher layer parameter may be notified from the base station to the UE through higher layer signaling, for example. Here, the higher layer signaling may be implemented by using, for example, RRC (Radio Resource Control) signaling, broadcast information (master information block (MIB), system information blocks (SIBs), and so on), MAC (Medium Access Control) signaling (for example, MAC control elements (MAC CEs)), and other signals and/or combinations of these.

In a case that cross carrier scheduling is used in one cell, the UE may identify the configuration of the cross carrier scheduling for the cell by using a higher layer parameter (for example, cross carrier scheduling configuration information, CrossCarrierSchedulingConfig).

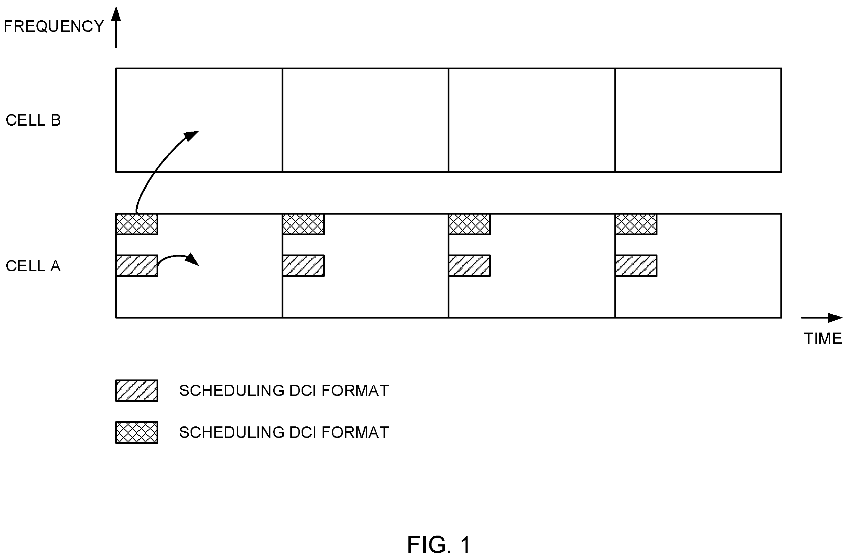

As shown in FIG. 1, the UE may be configured with the cross carrier scheduling of a shared channel (data or the PDSCH or PUSCH) from a cell A to a cell B. In this case, for the UE, CrossCarrierSchedulingConfig is configured for the cell B, and CrossCarrierSchedulingConfig may include a scheduling cell index (cif-InSchedulingCell) indicating the cell A. The cell (cell A) used to transmit DCI for scheduling of a shared channel may be referred to as a scheduling cell. The cell used to transmit the shared channel (the cell scheduled by using the DCI, the cell B) may be referred to as a scheduled cell.

The UE for which the cross carrier scheduling from the cell A to the cell B is configured monitors, in the cell A, the DCI for scheduling of the shared channel in the cell B (for example, DCI format 0_1 (UL grant) or DCI format 1_1 (DL assignment)). DCI format 0_1 (UL grant) or DCI format 1_1 (DL assignment) includes a 3-bit CIF (Carrier Indication Field). To which scheduled cell each value of the CIF corresponds may be configured through higher layer signaling, and in a case that this is not configured, the value of the CIF may indicate a Serving cell Index (for example, in a case that the value of the CIF is 2, the Serving cell index of the scheduled cell is determined as 2.

The UE may monitor, in the cell A, DCI for scheduling of the shared channel (PDSCH or PUSCH) in the cell A. The UE monitors, in the cell A, DCI for scheduling of the shared channel (PDSCH or PUSCH) in the cell B, and thus does not monitor, in the cell B, DCI for scheduling of the shared cell (PDSCH or PUSCH) in the cell B.

However, it is not clear how the UE monitors the particular DCI format in a case that scheduling between different carriers (cross carrier scheduling) is configured. A failure to determine this relationship may prevent the UE from appropriately monitoring or detecting the particular DCI format.

Thus, the inventors of the present invention came up with a method for monitoring the particular DCI format in a case that the cross carrier scheduling is configured for the UE.

The present embodiment will be described in detail with reference to the drawings as follows.

### (Aspect 1)

In Aspect 1, description will be given of the method for monitoring the particular DCI format in a case that the cross carrier scheduling is configured for the UE.

Here, a case will be described in which the UE is configured with the cross carrier scheduling of the shared channel (PDSCH or PUSCH) from the cell A to the cell B (a case in which the UE is configured with CrossCarrierSchedulingConfig for the cell B, and CrossCarrierSchedulingConfig includes a scheduling cell index (cif-InSchedulingCell) indicating the cell A).

In this case, the UE may monitor the particular DCI format for the cell B in accordance with one of Aspects 1-1, 1-2, and 1-3 described below.

### (Aspect 1-1)

The UE may be configured with monitoring of a particular DCI format for a given cell on another cell.

In a case that a particular condition is satisfied, the UE need not expect that the UE is configured with monitoring of a particular DCI format for a given cell on another cell. The particular condition may be that the UE is configured with scheduling of the shared channel in the cell by another cell.

In other words, in a case that the scheduled cell is not the same as the scheduling cell, the UE need not expect that monitoring of the particular DCI format on the scheduled cell is configured for the UE. The case where the scheduled cell is not the same as the scheduling cell may correspond to a case that the UE is configured with CrossCarrierSchedulingConfig for the scheduled cell and where the scheduling cell in CrossCarrierSchedulingConfig (for example, schedulingCellInfo) is set to other cell (for example, 'other' (indicating that the scheduled cell is scheduled by other cell).

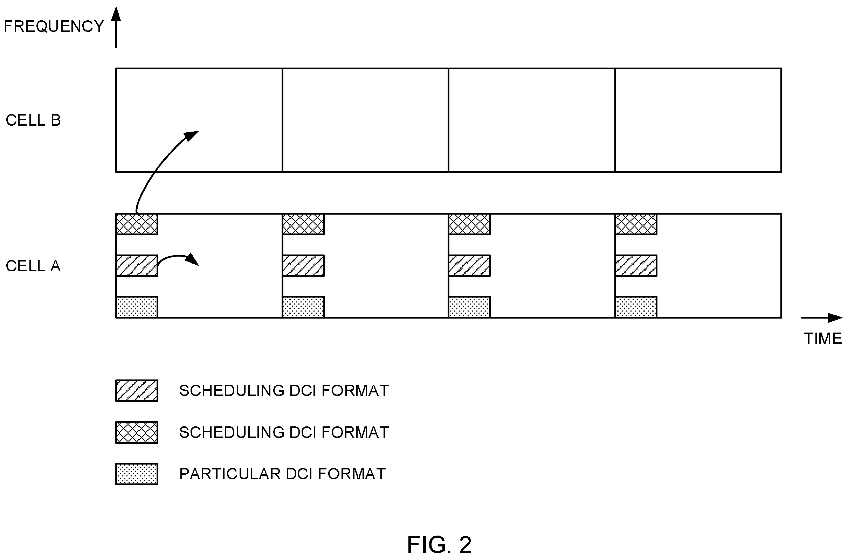

As shown in FIG. 2, the UE may monitor the particular DCI format for the cell B on the cell A as is the case with the DCI format for scheduling the shared channel in the cell B (for example, DCI format 0_1 or 1_1).

Consequently, when the cross carrier scheduling is configured, a case can be eliminated where the scheduled cell, which is different from the scheduling cell, monitors the DCI format. This allows simplification of the PDCCH monitoring operation by the UE and enabling a reduction in power consumption involved in PDCCH monitoring.

### (Aspect 1-2)

The UE may be configured with monitoring of a particular DCI format for a given cell on the same cell.

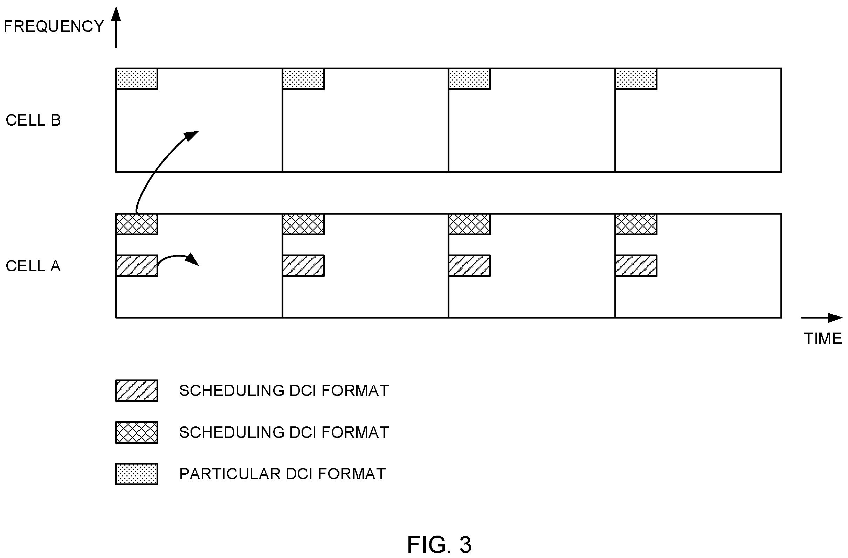

For example, it is assumed that the cross carrier scheduling is configured for the UE such that the UE monitors, on the cell A, a DCI format for scheduling of the shared channel in the cell B. At this time, for the UE, the higher layer parameter related to monitoring of a particular DCI format is separately configured. However, the cell monitoring the particular DCI format is configured on the cell B. As shown in FIG. 3, the UE may monitor, on the cell A, the DCI format for scheduling of the shared channel in the cell B and monitors, on the cell B, the particular DCI format for the cell B.

This enables avoidance of a problem in which a plurality of pieces of DCI are multiplexed in the cell A to congest the PDCCHs in the cell A, thus increasing the blocking probability of the PDCCHs.

### (Aspect 1-3)

The UE is configured with monitoring of a particular DCI format for the cell B on at least one of the cells A and B.

In which cell the particular DCI format for the cell B is monitored may depend on the implementation of a network (NW, base station).

For example, it is assumed that the cross carrier scheduling is configured for the UE such that the UE monitors, on the cell A, a DCI format for scheduling of the shared channel in the cell B. At this time, for the UE, the higher layer parameter related to monitoring of the particular DCI format is separately configured. However, the cell monitoring the particular DCI format is configured either on the cell A or on the cell B. In a case of configuration on the cell A, as shown in FIG. 2, the UE monitors, on the cell A, the DCI format for scheduling of the shared channel in the cell B, and also monitors, on the cell A, the particular DCI format for the cell B. In a case of configuration on the cell B, as shown in FIG. 3, the UE monitors, on the cell A, the DCI format for scheduling of the shared channel in the cell B, and monitors, on the cell B, the particular DCI for the cell B. For the UE, on which cell the particular DCI format for the cell B is monitored may be configured by a higher layer parameter. The higher layer parameter may be included in CrossCarrierSchedulingConfig.

The UE configured with monitoring, in the cell A, of the particular DCI format for the cell B monitors, on the cell A, the DCI format for scheduling of the shared channel in the cell A or the cell B and the particular DCI format for the cell B, as in a case of FIG. 2 described above.

The UE configured with monitoring, in the cell B, of the particular DCI format for the cell B monitors, in the cell A, the DCI format for scheduling of the shared channel in the cell A or the cell B and monitors, on the cell A, the particular DCI format for the cell B, as in a case of FIG. 3 described above.

In Aspects 1 to 3, the base station can flexibly configure the cell in which the DCI format is transmitted.

According to Aspect 1, it is clear in which cell the UE monitors the particular DCI format for the cell configured with the cross carrier scheduling, allowing the UE to appropriately monitor the particular DCI format.

### (Aspect 2)

In Aspect 2, UE capability related to the cross carrier scheduling and the particular DCI format will be described.

In a case that the UE supports the cross carrier scheduling and also supports the particular DCI format, monitoring a particular DCI format for a given cell in another cell may be supported. In a case that the UE does not support at least one of the cross carrier scheduling and the particular DCI format, the UE may expect that monitoring the particular DCI format for the given cell in another cell is not configured for the UE.

The support of monitoring of the particular DCI format for the given cell in another cell may be defined as UE capability related to the cross carrier scheduling or as UE capability related to the particular DCI format.

The UE may report UE capability information indicating the support of monitoring the particular DCI format for the given cell in another cell.

According to Aspect 2, whether the UE supports monitoring of the particular DCI format for the given cell in another cell is clear, allowing the UE to appropriately monitor the particular DCI format.

Note that the UE capability information related to the cross carrier scheduling and monitoring of the particular DCI format may be information reporting the presence of support for a particular subcarrier spacing, information reporting the presence of support for a particular frequency band or frequency band combination, or information reporting the presence of support for all subcarrier spacings, frequency bands, or frequency band combinations.

### (Radio Communication System)

Hereinafter, a structure of a radio communication system according to the present embodiment will be described. In this radio communication system, the radio communication method according to each embodiment (aspect) of the present disclosure described above may be used alone or may be used in combination for communication.

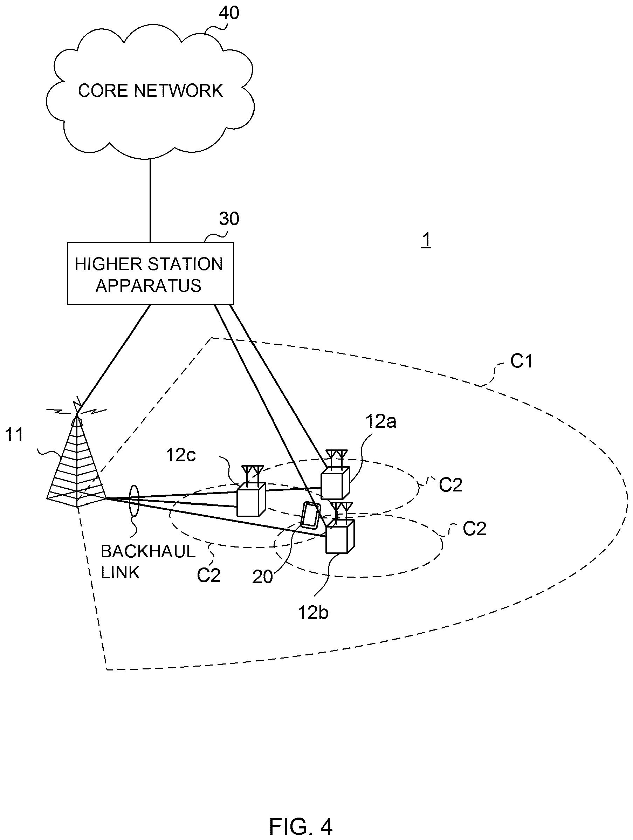

FIG. 4 is a diagram to show an example of a schematic structure of the radio communication system according to the present embodiment. A radio communication system 1 can adopt carrier aggregation (CA) and/or dual connectivity (DC) to group a plurality of component carriers (carrier or cell) into one.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a base station 11 that forms a macro cell C1 of a relatively wide coverage, and base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the base station 11 and the base stations 12. It is assumed that the user terminals 20 use the macro cell C1 and the small cells C2 at the same time by means of CA or DC. The user terminals 20 can execute CA or DC by using a plurality of cells (CCs).

The radio communication system 1 may support dual connectivity (multi-RAT dual connectivity (MR-DC)) between a plurality of RATs (Radio Access Technologies). The MR-DC may include dual connectivity (EN-DC (E-UTRA-NR Dual Connectivity)) between LTE (E-UTRA) and NR in which a base station (eNB) of LTE serves as a master node (MN) and a base station (gNB) of NR serves as a secondary node (SN), dual connectivity (NE-DC (NR-E-UTRA Dual Connectivity)) between NR and LTE in which a base station (gNB) of NR serves as an MN and a base station (eNB) of LTE (E-UTRA) serves as an SN, and so on. The radio communication system 1 may support dual connectivity between a plurality of base stations in the same RAT (for example, dual connectivity (NN-DC (NR-NR Dual Connectivity)) where both of an MN and an SN are base stations (gNB) of NR).

Between the user terminals 20 and the base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the base stations 12, a carrier of a relatively high frequency band (for example, 3.5 GHz, 5 GHz, and so on) and a wide bandwidth may be used, or the same carrier as that used between the user terminals 20 and the base station 11 may be used. Note that the structure of the frequency band for use in each base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to at least one of transmission and reception of at least one of a given signal and channel, and for example, may indicate at least one of a subcarrier spacing, a bandwidth, a symbol length, a cyclic prefix length, a subframe length, a TTI length, the number of symbols per TTI, a radio frame structure, particular filter processing performed by a transceiver in a frequency domain, particular windowing processing performed by a transceiver in a time domain, and so on. For example, at least one case of a case where given physical channels use different subcarrier spacings of the OFDM symbols constituted and a case where different numbers of the OFDM symbols, it may be referred to as that the numerologies are different.

A wired connection (for example, an optical fiber in compliance with the CPRI (Common Public Radio Interface), an X2 interface, and so on) or a wireless connection may be established between the base station 11 and the base stations 12 (or between two base stations 12).

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Each base station 12 may be connected with the higher station apparatus 30 via the base station 11.

Note that the base station 11 is a base station having a relatively wide coverage, and may be referred to as a "macro base station," a "central node," an "eNB (eNodeB)," a "transmitting/receiving point" and so on. The base stations 12 are base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the base stations 11 and 12 will be collectively referred to as "base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### <Base Station>

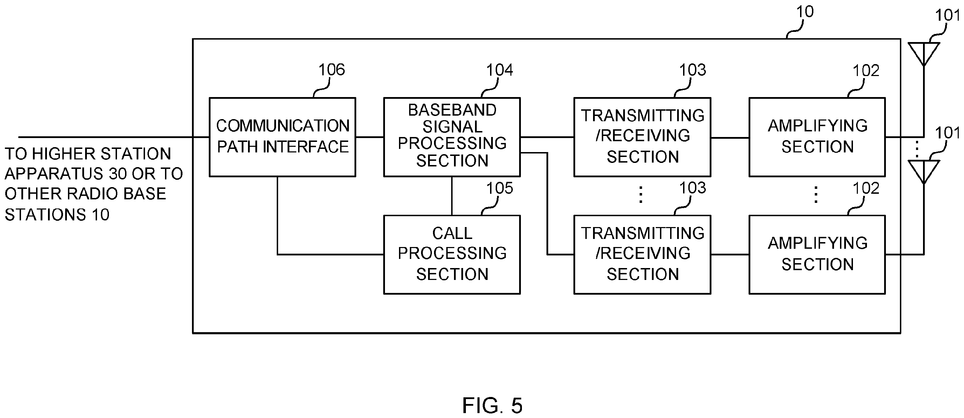

FIG. 5 is a diagram to show an example of an overall structure of the base station according to the present embodiment. A base station 10 includes a plurality of transmitting/receiving antennas 101, amplifying sections 102, transmitting/receiving sections 103, a baseband signal processing section 104, a call processing section 105 and a communication path interface 106. Note that the base station 10 may be configured to include one or more transmitting/receiving antennas 101, one or more amplifying sections 102 and one or more transmitting/receiving sections 103.

User data to be transmitted from the base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the base station 10, manages the radio resources and so on.

The communication path interface 106 transmits and/or receives signals to and/or from the higher station apparatus 30 via a given interface. The communication path interface 106 may transmit and/or receive signals (backhaul signaling) with other base stations 10 via an inter-base station interface (for example, an optical fiber in compliance with the CPRI (Common Public Radio Interface) and an X2 interface).

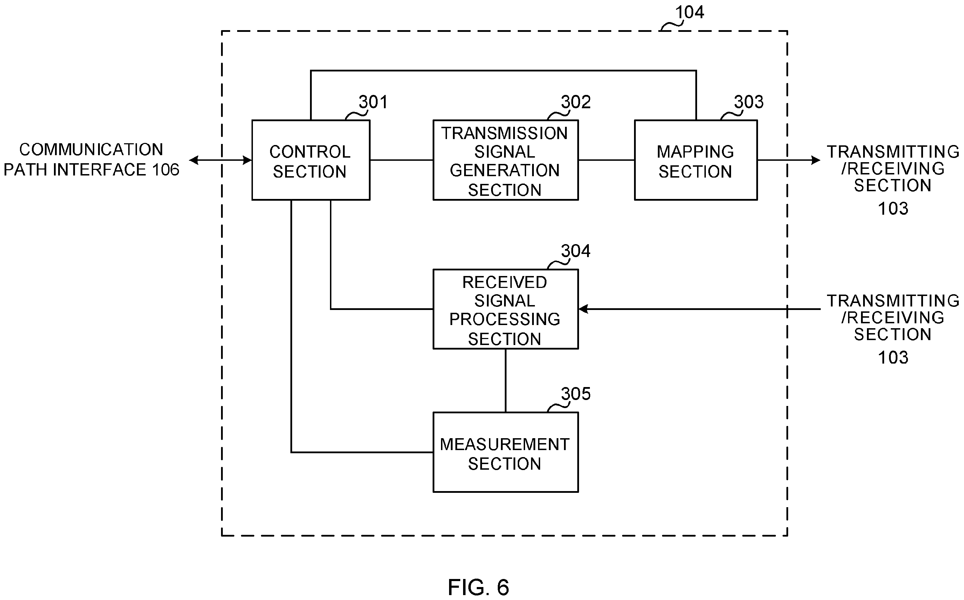

FIG. 6 is a diagram to show an example of a functional structure of the base station according to the present embodiment. Note that, the present example primarily shows functional blocks that pertain to characteristic parts of the present embodiment, and it is assumed that the base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the base station 10, and some or all of the structures do not need to be included in the baseband signal processing section 104.

The control section (scheduler) 301 controls the whole of the base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH. Transmission confirmation information, and so on). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH. Transmission confirmation information, and so on), a random access preamble (for example, a signal transmitted on the PRACH), an uplink reference signal, and so on.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to given radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). he received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

The transmitting/receiving section 103 may transmit configuration information related to at least one of the cell group, the cell, the BWP, the CORESET, the search space, and the cross carrier scheduling. The transmitting/receiving section 103 may transmit the DCI.

The control section 301 may control the configuration of at least one of the cell group, the cell, the BWP, the CORESET, the search space, and the cross carrier scheduling and control transmission of configuration information regarding at least one of these.

### <User Terminal>

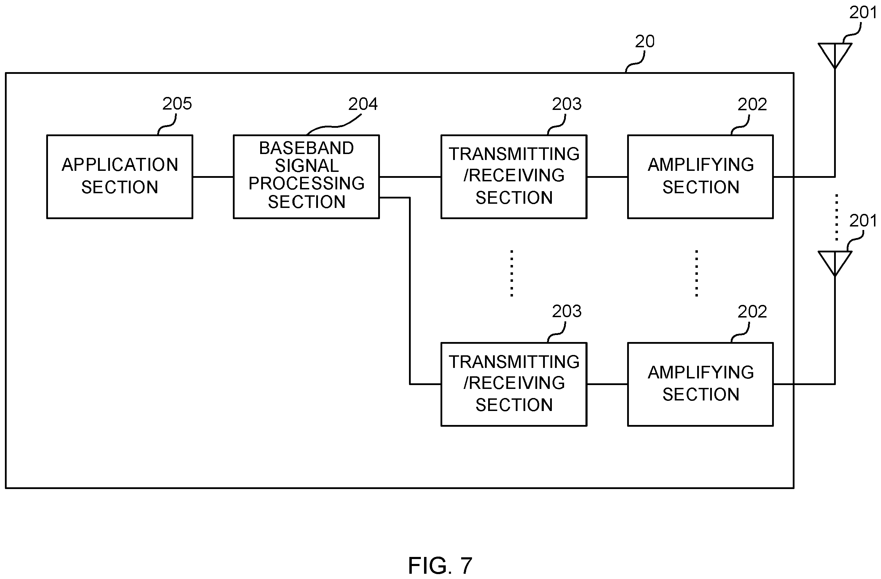

FIG. 7 is a diagram to show an example of an overall structure of a user terminal according to the present embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

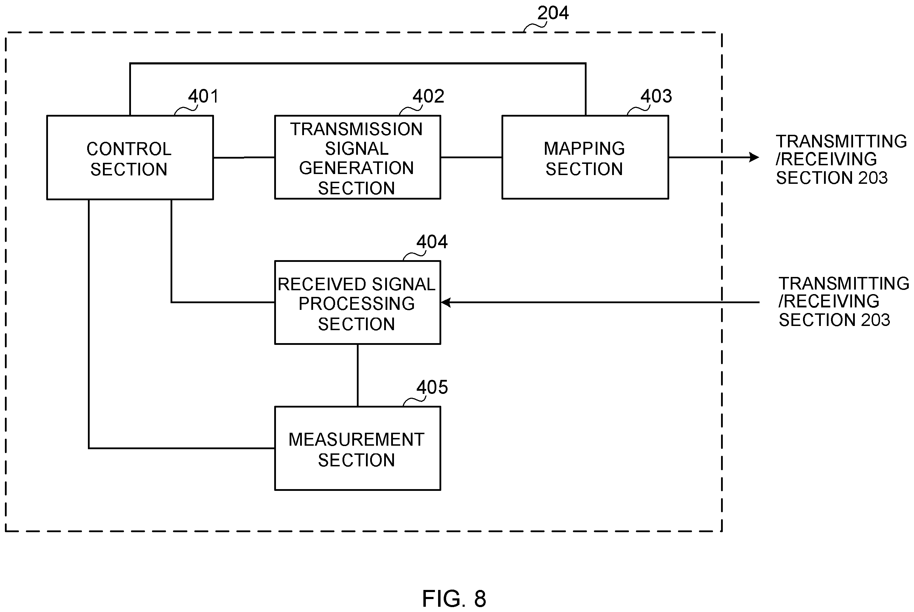

FIG. 8 is a diagram to show an example of a functional structure of a user terminal according to the present embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may control monitoring of the DCI that is CRC scrambled with a given identifier (at least one of, for example, C-RNTI, CS-RNTI, MCS-C-RNTI, SI-RNTI, P-RNTI, RA-RNTI, TC-RNTI, INT-RNTI, SFI-RNTI, TPC-PUSCH-RNTI, TPC-PUCCH-RNTI, TPC-SRS-RNTI, and SP-CSI-RNTI).

In a case that the control section 401 acquires a variety of information reported by the base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

Note that the transmitting/receiving section 203 may receive configuration information related to at least one of the cell group, the cell, the BWP, the CORESET, the search space, and the cross carrier scheduling. The transmitting/receiving section 203 may receive the DCI.

The control section 401 may control reception of configuration information regarding at least one of the cell group, the cell, the BWP, the CORESET, the search space, and the cross carrier scheduling.

The transmitting/receiving section 203 may monitor, in a first cell (cell A or scheduling cell), first downlink control information for scheduling (cross carrier scheduling) of the shared channel in a second cell (cell B or scheduled cell) and monitor, in at least one of the first cell and the second cell, second downlink control information (particular DCI format) indicating control of at least one of the slot format, pre-emption, and transmission power (at least one of the slot formation indication, pre-emption indication, TPC command, and group of TPC commands). The control section 401 may perform the control on the second cell, based on the second downlink control information.

The transmitting/receiving section 203 may monitor the second downlink control information in the first cell.

In a case that the control section 401 is configured with scheduling of the shared channel in the second cell by using a cell other than the second cell (cross carrier scheduling, scheduling of the scheduled cell by other cell), the control section need not be configured with monitoring of the second downlink control information in the second cell.

In a case of supporting the cross carrier scheduling and the downlink control information format (particular DCI format) for the control, the control section 401 may support monitoring, in the first cell, of the second downlink control information indicating the control for the second cell.

The transmitting/receiving section 203 may monitor the second downlink control information in the second cell.

The transmitting/receiving section 203 may transmit the UE capability information indicating the support of at least one of the cross carrier scheduling and the downlink control information format for the control.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

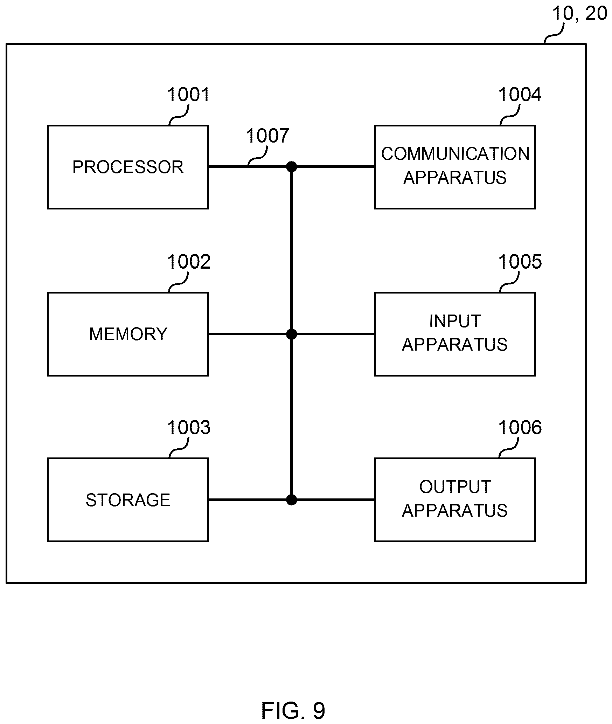

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. In the transmitting/receiving section 103 (203), the transmitting section 103a (203a) and the receiving section 103b (203b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "transmission time interval (TTI)," a plurality of consecutive subframes may be referred to as a "TTI" or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case that one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably.

In the present disclosure, the terms such as "precoding," a "precoder," a "weight (precoding weight)," "quasi-co-location (QCL)," a "TCI state (Transmission Configuration Indication state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an IoT (Internet of Things) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

The invention is defined by the appended claims.

## Claims

1. A terminal (20) comprising:
a receiving section (203) configured to monitor, in a first cell, first downlink control information, DCI, for scheduling a shared channel on a second cell; and
a control section (401) configured to, when capability information related to cross-carrier scheduling and monitoring of a second DCI used to control at least one of a slot format, a preemption and a transmit power are reported, and when the shared channel on the second cell is configured to be scheduled using the first cell, control not to monitor the second DCI in the second cell, and control to monitor the second DCI in the first cell.

2. The terminal (20) according to claim 1, wherein the receiving section (203) is configured to receive a higher layer parameter that indicates the shared channel on the second cell is to be scheduled using the first cell.

3. The terminal (20) according to claim 1 or 2, wherein the second DCI is to be monitored in the Type3-physical downlink control channel, PDCCH, common search space, CSS.

4. The terminal (20) according to any one of claims 1 to 3, wherein the second DCI is at least one of a DCI format 2 0, a DCI format 2_1, a DCI format 2_2 and a DCI format 2_3.

5. A radio communication method performed by a terminal (20), the method comprising:
monitoring, in a first cell, a first downlink control information, DCI, for scheduling a shared channel on a second cell; and
when capability information related to cross-carrier scheduling and monitoring of a second DCI used to control at least one of a slot format, a preemption and a transmit power are reported, and when the shared channel on the second cell is configured to be scheduled using the first cell, controlling not to monitor the second DCI in the second cell, and controlling to monitor the second DCI in the first cell.

6. A system comprising a terminal (20) and a base station (10), wherein:
the terminal (20) comprises:
a receiving section (203) configured to monitor, in a first cell, first downlink control information, DCI, for scheduling a shared channel on a second cell; and
a control section (401) configured to, when capability information related to cross-carrier scheduling and monitoring of a second DCI used to control at least one of a slot format, a preemption and a transmit power are reported, and when the shared channel in the second cell is configured to be scheduled using the first cell, controls not to monitor the second DCI in the second cell, and control to monitor the second DCI in the first cell, and
the base station (10) comprises:
a transmitting section (103) configured to transmit at least one of the first DCI and the second DCI.

## Patentansprüche

1. Endgerät (20), umfassend:
einen Empfangsabschnitt (203), der so konfiguriert ist, dass er in einer ersten Zelle eine erste Downlink-Steuerungsinformation, DCI, überwacht, um einen gemeinsam genutzten Kanal in einer zweiten Zelle zu zeitlich planen; und
einen Steuerabschnitt (401), der zum Steuern des Nichtüberwachens der zweiten DCI in der zweiten Zelle und des Überwachens der zweiten DCI in der ersten Zelle konfiguriert ist, wenn Fähigkeitsinformationen, die sich auf die trägerübergreifende Zeitplanung und die Überwachung einer zweiten DCI beziehen, die verwendet wird, um mindestens eines von einem Slot-Format, einer Präemption und einer Sendeleistung zu steuern, gemeldet werden, und wenn der gemeinsam genutzte Kanal in der zweiten Zelle und wenn der gemeinsam genutzte Kanal in der zweiten Zelle zur Zeitplanung unter Verwendung der ersten Zelle konfiguriert ist.

2. Endgerät (20) nach Anspruch 1, wobei der Empfangsabschnitt (203) so konfiguriert ist, dass er einen Parameter einer höheren Schicht empfängt, der anzeigt, dass der gemeinsam genutzte Kanal in der zweiten Zelle unter Verwendung der ersten Zelle zeitlich geplant werden soll.

3. Endgerät (20) nach Anspruch 1 oder 2, wobei die zweite DCI im Typ3-physikalischen Downlink-Steuerkanal, PDCCH, gemeinsamen Suchraum, CSS, zu überwachen ist.

4. Endgerät (20) nach einem der Ansprüche 1 bis 3, wobei es sich bei der zweiten DCI mindestens um ein DCI-Format 2_0, ein DCI-Format 2_1, ein DCI-Format 2_2 oder ein DCI-Format 2_3 handelt.

5. Funkkommunikationsverfahren, das von einem Endgerät (20) durchgeführt wird, wobei das Verfahren umfasst:
Überwachen einer ersten Downlink-Steuerungsinformation, DCI, in einer ersten Zelle, um einen gemeinsam genutzten Kanal in einer zweiten Zelle zeitlich zu planen; und
wenn Fähigkeitsinformationen, die sich auf die trägerübergreifende Zeitplanung und Überwachung einer zweiten DCI beziehen, die verwendet wird, um mindestens eines von einem Slot-Format, einer Präemption und einer Sendeleistung zu steuern, gemeldet werden, und wenn der gemeinsam genutzte Kanal auf der zweiten Zelle zum unter Verwendung der ersten Zelle zeitlich geplant werden konfiguriert ist, Steuern, die zweite DCI in der zweiten Zelle nicht zu überwachen, und Steuern, die zweite DCI in der ersten Zelle zu überwachen.

6. System, umfassend ein Endgerät (20) und eine Basisstation (10), wobei:
das Endgerät (20) umfasst:
einen Empfangsabschnitt (203), der so konfiguriert ist, dass er in einer ersten Zelle eine erste Downlink-Steuerungsinformation, DCI, überwacht, um einen gemeinsam genutzten Kanal in einer zweiten Zelle zu zeitlich planen; und
einen Steuerabschnitt (401), der konfiguriert ist zum Steuern des Nichtüberwachens der zweiten DCI in der zweiten Zelle und zum Steuern des Überwachens der zweiten DCI in der ersten Zelle, wenn Fähigkeitsinformationen, die sich auf die trägerübergreifende Zeitplanung und das Überwachen einer zweiten DCI beziehen, die verwendet wird, um mindestens eines von einem Slot-Format, einem Vorrecht und einer Sendeleistung zu steuern, und wenn der gemeinsam genutzte Kanal in der zweiten Zelle konfiguriert ist, um unter Verwendung der ersten Zelle zeitlich geplant zu werden, und
die Basisstation (10) umfasst:
einen Übertragungsabschnitt (103), der zum Übertragen mindestens eines von dem ersten DCI und dem zweiten DCI konfiguriert ist.

## Revendications

1. Terminal (20) comprenant :
une section (203) de réception configurée pour surveiller, dans une première cellule, des premières informations de commande de liaison descendante, DCI, pour planifier un canal partagé sur une seconde cellule ; et
une section (401) de commande configurée pour, lorsque des informations de capacité associées à une planification et à une surveillance inter-porteuse de secondes DCI utilisées pour commander au moins l'un d'un format de créneau, d'une préemption et d'une puissance de transmission sont rapportées, et lorsque le canal partagé sur la seconde cellule est configuré pour être planifié à l'aide de la première cellule, commander de ne pas surveiller les secondes DCI dans la seconde cellule, et commander de surveiller les secondes DCI dans la première cellule.

2. Terminal (20) selon la revendication 1, dans lequel la section (203) de réception est configurée pour recevoir un paramètre de couche supérieure qui indique que le canal partagé sur la seconde cellule doit être planifié à l'aide de la première cellule.

3. Terminal (20) selon la revendication 1 ou la revendication 2, dans lequel les secondes DCI sont à surveiller dans l'espace de recherche commun, CSS, du canal de commande de liaison descendante physique de Type3, PDCCH.

4. Terminal (20) selon l'une quelconque des revendications 1 à 3, dans lequel les secondes DCI sont au moins un d'un format 2_0 de DCI, d'un format 2_1 de DCI, d'un format 2_2 de DCI et d'un format 2_3 de DCI.

5. Procédé de communication radio mis en oeuvre par un terminal (20), le procédé comprenant :
la surveillance, dans une première cellule, de premières informations de commande de liaison descendante, DCI, pour planifier un canal partagé sur une seconde cellule ; et
lorsque des informations de capacité associées à une planification et à une surveillance inter-porteuse de secondes DCI utilisées pour commander au moins un d'un format de créneau, d'une préemption et d'une puissance de transmission sont rapportées, et lorsque le canal partagé sur la seconde cellule est configuré pour être planifié à l'aide de la première cellule, la commande de ne pas surveiller les secondes DCI dans la seconde cellule, et la commande de surveiller les secondes DCI dans la première cellule.

6. Système comprenant un terminal (20) et une station (10) de base, dans lequel :
le terminal (20) comprend :
une section (203) de réception configurée pour surveiller, dans une première cellule, des premières informations de commande de liaison descendante, DCI, pour planifier un canal partagé sur une seconde cellule ; et
une section (401) de commande configurée pour, lorsque des informations de capacité associées à une planification et à une surveillance inter-porteuse de secondes DCI utilisées pour commander au moins un d'un format de créneau, d'une préemption et d'une puissance de transmission sont rapportées, et lorsque le canal partagé dans la seconde cellule est configuré pour être planifié à l'aide de la première cellule, commander de ne pas surveiller les secondes DCI dans la seconde cellule, et commander de surveiller les secondes DCI dans la première cellule, et
la station de base (10) comprend :
une section (103) de transmission configurée pour transmettre au moins une des premières DCI et des secondes DCI.
